# EUROPÄISCHE PATENTSCHRIFT

(11) **EP 3 105 005 B1**
(45) Veröffentlichungstag und Bekanntmachung des Hinweises auf die Patenterteilung: **16.10.2019**
(21) Anmeldenummer: 15708449.2
(22) Anmeldetag: 10.02.2015
(51) Int. Cl.: B25B 1/10

(54) **SPANNVORRICHTUNG ZUM SPANNEN EINES TURBINENSCHAUFELROHLINGS**
CLAMPING DEVICE FOR CLAMPING A TURBINE BLADE BLANK
DISPOSITIF DE SERRAGE POUR SERRER UNE ÉBAUCHE D'AUBE DE TURBINE

(30) Priorität: 10.02.2014 DE 102014101628
(43) Veröffentlichungstag der Anmeldung: 21.12.2016
(73) Patentinhaber: Grasch GmbH, 73249 Wernau (DE); Scherer Engineering GmbH, 60529 Frankfurt am Main (DE)
(72) Erfinder: SCHERER, Josef, 60529 Frankfurt am Main (DE); GRASSL, Johann, 73116 Wäschenbeuren (DE)
(74) Vertreter: Habermann Intellectual Property Partnerschaft von Patentanwälten mbB
(86) Internationale Anmeldenummer: PCT/EP2015/052795
(87) Internationale Veröffentlichungsnummer: WO 2015/118180

(56) Entgegenhaltungen:
- EP-A2- 0 453 391
- WO-A1-01/15845
- WO-A2-2004/072748
- DE-A1-102011 102 543

## Beschreibung

Die Erfindung betrifft eine Spannvorrichtung zum Einspannen eines Turbinenschaufelrohlings in einer Bearbeitungsmaschine mit einer Grundspanneinheit, an der eine erste und eine zweite Klemmbackenaufnahmeeinrichtung gelagert sind, wobei an der ersten Klemmbackenaufnahmeeinrichtung eine erste Klemmbacke und an der zweiten Klemmbackenaufnahmeeinrichtung eine zweite Klemmbacke gelagert sind, wobei der Turbinenschaufelrohling zwischen den Klemmbacken klemmend festgelegt werden kann, und wobei die erste Klemmbackenaufnahmeeinrichtung mindestens eine erste Bearbeitungswerkzeugdurchführungsausnehmung und die zweite Klemmbackenaufnahmeeinrichtung mindestens eine zweite Bearbeitungswerkzeugdurchführungsausnehmung aufweist, so dass ein Bearbeitungswerkzeug zur Bearbeitung eines ersten zwischen den Klemmbackenaufnahmeeinrichtungen liegenden unteren Kantenradiusbereichs des Turbinenschaufelrohlings durch die erste Bearbeitungswerkzeugdurchführungsausnehmung und zur Bearbeitung eines zweiten zwischen den Klemmbackenaufnahmeeinrichtungen liegenden unteren Kantenradiusbereichs des Turbinenschaufelrohlings durch die zweite Bearbeitungswerkzeugdurchführungsausnehmung hindurchgeführt werden kann. Zudem betrifft die Erfindung ein Verfahren zum Einspannen und Bearbeiten eines Turbinenschaufelrohlings in einer Bearbeitungsmaschine.

Zum Bearbeiten von Rohlingen in einer Fräsmaschine müssen diese auf geeignete Spannsysteme aufgenommen, fixiert und eingespannt werden. Diese Einspannung muss dabei so beschaffen sein, dass der Rohling, der bei seiner Bearbeitung rotiert, immer um eine vorgegebene Rotationsachse rotiert und entsprechend eingespannt ist. Die Einspannung muss weiterhin ausreichend widerstandsfähig sein, so dass insbesondere bei spanenden Bearbeitungsvorgängen auch größere Kräfte ohne weiteres abgeleitet werden können und nicht zu einer Verlagerung des Rohlings, bzw. zu einer Verlagerung des Rotationszentrums führen. Andererseits sollte der Rohling insbesondere an seinen der jeweiligen Spannvorrichtung zugewandten Endbereichen gut zugänglich sein, so dass möglichst kurze Werkzeuge zum Einsatz kommen können und eine weitgehende Bearbeitung dieser Bereiche in einfacher Weise möglich ist. Dies bedeutet, dass die Spannvorrichtung einen möglichst kleinen Flugkreis zulässt.

Um beispielsweise Turbinenschaufeln aus einem Rohling herstellen zu können, muss der Rohling auf einer Fräsmaschine eingespannt werden. Hierzu werden üblicherweise Spannvorrichtungen mit Klemmbacken verwendet, die den Rohling klemmend an der Spannvorrichtung festlegen. Die Ausrichtung des Rohlings erfolgt über eine Mittenbohrung an den gegenüberliegenden Endflächen des Rohlings, die bei der Herstellung des Rohlings eingearbeitet werden und dessen Rotationsachse vorgeben. Um eine zuverlässige Aufnahme des Rohlings zwischen den Klemmbacken gewährleisten zu können, werden oftmals in einem ersten Arbeitsgang Spannflächen im Bereich der Endflächen herausgearbeitet. Diese Parallelflächen sollen möglichst klein sein und innerhalb der Kopf- und Fußaußenkontur der fertigen Turbinenschaufel liegen, um Materiallänge bei dem Rohling einsparen zu können. Dies stellt einen zusätzlichen Arbeitsschritt dar, der vor einer Aufnahme des Rohlings zur Bearbeitung in der Fräsmaschine vorgenommen werden muss.

In WO 2004/072748 ist eine Bearbeitungsmaschine für die Bearbeitung von Turbinenschaufelrohlingen beschrieben, wobei während der Bearbeitung eines Turbinenschaufelrohlings mehrfach die Einspannung des Turbinenschaufelrohlings in einer Spanneinrichtung der Bearbeitungsmaschine gewechselt werden muss.

Marktübliche Zweibackenfutterzentralspanner sind für viele Anwendungen ungeeignet, da sie keine Zentrumsfixierung aufweisen, so dass der Rohling hiermit nicht zuverlässig rotationssymmetrisch eingespannt werden kann.

Die bekannten Spannvorrichtungen, die eine Mittenzentrierung des Rohlings ermöglichen, gewährleisten jedoch keine eindeutige Positionierung des Rohlings, so dass beispielsweise die Ausrichtung des Rohlings um 180° vertauschbar ist. Hierdurch ist es bei nachfolgenden Bearbeitungsschritten erforderlich, dass die Turbinenschaufel erneut in derselben Fräsmaschine oder in einer anderen Bearbeitungsmaschine eingespannt wird, wobei eine identische Ausrichtung der Turbinenschaufel nicht gewährleistet werden kann.

Zum Bearbeiten von solchen Turbinenschaufelrohling-Typen müssen diese auf geeigneten Spannsysteme fixiert werden und anschließend im fertigbearbeiteten Profilblattbereich gespannt werden. Diese Aufspannung muss dabei so beschaffen sein, dass zum Einen dieser Profilblattbereich der Turbinenschaufelrohlinge keinerlei Beschädigungen (Kratzer, Eindellungen, Verformungen oder Ablagerungen von Spannmittel etc.) bekommt und zum Anderen an der gesamten Turbinenschaufel keinerlei Verformungen erzeugt werden. Ferner muss diese Aufspannung so geschaffen sein, dass man in einer Aufspannung durch eine Fünfachsenbearbeitung mittels Fräsen oder Schleifen alle noch zu bearbeiteten Turbinenschaufelbereiche herstellen kann. Des Weiteren muss die Aufspannung so konzipiert sein, dass im gespannten Zustand, an den Turbinenschaufelrohlingen durchgeführten Bearbeitungsvorgängen auch größere Kräfte abgeleitet werden können und nicht zur Verlagerung der Turbinenschaufelrohlinge im Spannsystem führen. Anderseits sollen die Turbinenschaufelrohlinge insbesondere an ihrer Kopf- und Fußpartie, sowie an den beiden Profilradienbereiche gut zugängig sein, so dass möglichst kurze Werkzeuge zum Einsatz kommen können. Auch müssen diese Bereiche für beliebige Messsysteme (Taster oder Lasermesssysteme) zugängig sein, da eine Endkontrolle üblicherweise auch in dieser Aufspannung erfolgt.

Die Flächen für die Aufspannung müssen daher möglichst klein gehalten werden und so ausgebildet sein, dass beim Spannen keinerlei Abdrücke und keiner Profilverformungen an der Turbinenschaufel entstehen.

Marktübliche Spannsysteme nach dem Oberbegriff des Anspruchs 1, wie sie beispielsweise in WO01/15845 A1 beschrieben sind, lassen derzeit nur die Bearbeitung von maximal zwei der vier bekannten Turbinenschaufelrohlingbereiche gleichzeitig zu. Dies bedeutet, dass mindestens einmal, meist jedoch zweimal die Turbinenschaufelrohlinge umgespannt werden müssen, da die derzeit handelsüblichen Spannsysteme zumindest immer eine bzw. zwei der vier Hauptbereiche verdecken. Durch dieses Umspannen der Turbinenschaufelrohlinge besteht die Gefahr, dass in den extrem dünnwandigen Profilblattbereichen der Turbinenschaufel selbst Verformungen, Lage- bzw. Positionsabweichungen auftreten, die zum geometrischen Ausschuss der Turbinenschaufel führen. Ferner wächst die Gefahr, dass durch dieses mehrmalige Umspannen die fertigbearbeiteten Profilblattbereiche beschädigt werden. Die Produktionsausschussquote liegt aus obigen Gründen derzeit bei ca. 30%.

Es wird deshalb als eine Aufgabe der Erfindung angesehen, eine Vorrichtung und ein Verfahren zum Spannen und Bearbeiten der Turbinenschaufelrohlinge bereitzustellen, mit dem ein Zugang zu den vier zu bearbeitenden Turbinenschaufelgeometriebereichen mit einem Bearbeitungswerkzeug möglich ist.

Diese Aufgabe wird erfindungsgemäß dadurch gelöst, dass die erste und zweite Bearbeitungswerkzeugdurchführungsausnehmung relativ zu einer Querachse der Klemmbackenaufnahmeeinrichtung versetzt angeordnet sind. Es war bisher nicht möglich, einen Turbinenschaufelrohling derart einzuspannen, dass alle vier zu bearbeiteten Kanten des Turbinenschaufelrohlings zugänglich waren, ohne den Turbinenschaufelrohling umspannen zu müssen. Bekanntermaßen kann es durch das Umspannen des Rohlings zu irreparablen Schädigungen des Rohlings kommen. Durch die erfindungsgemäße Spannvorrichtung ist es nunmehr möglich, den Rohling einmalig zu verspannen und alle vier Kanten zu bearbeiten. Durch die sich gegenüberliegenden Klemmbackenaufnahmeeinrichtung wird ein Kantenbereich des Turbinenschaufelrohling für ein Bearbeitungswerkzeug unzugänglich. Erfindungsgemäß ist jedoch vorgesehen, dass die Klemmbackenaufnahmeeinrichtungen mindestens eine Bearbeitungswerkzeugdurchführungsausnehmung aufweisen. Somit kann das Bearbeitungswerkzeug zur Bearbeitung eines ersten zwischen den Klemmbackenaufnahmeeinrichtungen liegenden unteren Kantenradiusbereichs des Turbinenschaufelrohlings durch die erste Bearbeitungswerkzeugdurchführungsausnehmung hindurchgeführt werden. Es erfolgt die Bearbeitung eines Teilbereichs des unteren Kantenradius. Zudem kann zur Bearbeitung eines zweiten zwischen den Klemmbackenaufnahmeeinrichtungen liegenden unteren Kantenradiusbereichs des Turbinenschaufelrohlings durch die zweite Bearbeitungswerkzeugdurchführungsausnehmung hindurchgeführt werden. Bei Bedarf kann der Turbinenschaufelrohling um 180° um seine Rotationsachse gedreht werden, um so eine rückwärtige Bearbeitung anzuschließen. Die Bearbeitung der Kantenbereiche, insbesondere der unteren Kantenbereiche des Turbinenschaufelrohlings erfolgt insbesondere in drei Schritten, beziehungsweise drei Bearbeitungsschritten, wobei der Rohling für die Ausführung der Bearbeitung nicht umgespannt werden muss. Auch die weiteren Bearbeitungsschritte der Kopf- und Fußbereich (das heißt der seitlichen) der Turbinenschaufelrohlinge können durchgeführt werden, ohne den Rohling hierfür umzuspannen. Durch die beiden Bearbeitungswerkzeugdurchführungsausnehmungen ist eine vollständige Bearbeitung des unteren Kantenradius des Turbinenschaufelrohlings möglich. Außerdem muss der Turbinenschaufelrohling für die weitere Bearbeitung der weiteren Kantenbereiche nicht umgespannt werden. Die weiteren Kantenbereiche (seitliche Kantenbereiche und oberer Kantenbereich) sind mit dem Bearbeitungswerkzeug leicht zugänglich, so dass keine Umspannung des Rohlings notwendig ist. Es ist also möglich, den Turbinenschaufelrohling einmal einzuspannen und vollständig zu bearbeiten.

Um zu vermeiden, dass das Bearbeitungswerkzeug schräg eingeführt werden muss, sind die Bearbeitungswerkzeugdurchführungsausnehmungen versetzt zueinander, das heißt insbesondere nicht deckungsgleich angeordnet. Hierdurch kann das Bearbeitungswerkzeug im Wesentlichen senkrecht zu den Klemmbackenaufnahmeeinrichtungen durch die Bearbeitungswerkzeugdurchführungsausnehmungen geführt werden.

In einer bevorzugten Ausführungsform der Erfindung ist die erste Bearbeitungswerkzeugdurchführungsausnehmung mittig in der ersten Klemmbackenaufnahmeeinrichtung angeordnet, wobei zwei weitere Bearbeitungswerkzeugdurchführungsausnehmungen außermittig in der zweiten Klemmbackenaufnahmeeinrichtung seitlich zu einem mittigen Stegbereich angeordnet sind. Es hat sich herausgestellt, dass durch diese Ausgestaltung der Bearbeitungswerkzeugdurchführungsausnehmungen in kurzer Zeit und in einfacher Weise der vollständige untere Kantenradius des Turbinenschaufelrohlings bearbeitet werden kann.

Es kann vorteilhaft sein, dass die erste Klemmbackenaufnahmeeinrichtung und die zweite Klemmbackenaufnahmeeinrichtung relativ zueinander verfahrbar sind. Die Klemmbackenaufnahmeeinrichtungen können so verfahrbar, insbesondere auf der Grundspanneinheit gelagert sein, dass diese zum Einspannen und Lösen des Turbinenschaufelrohlings aufeinander zu oder voneinander weg verfahren werden.

Um unterschiedliche Turbinenschaufelgeometrien in die Spannvorrichtung einzuspannen, ist vorgesehen, dass die erste und zweite Klemmbacke relativ zueinander verfahrbar sind. Die schwenkbar gelagerten Klemmbacken können sich an gekrümmte oder nicht parallel verlaufende Spannflächen des Rohlings anpassen und auch bei einer komplexen Formgebung des Rohlings dessen zuverlässige Festlegung zwischen den zusammengepressten Klemmbacken ermöglichen. Die Spannvorrichtung sollte zur Durchführung des vorangehend beschriebenen Verfahrens für verschiedene Rohlinge geeignet sein. Unterschiedliche Rohlinge können rechteckförmige Rohlinge oder aber geschmiedete Rohlinge, bzw. Gussrohlinge mit einer an die endgültige Kontur angepassten Formgebung sein. Zudem sollte die Spannvorrichtung so gestaltet sein, dass sie auf den unterschiedlichen Fräsmaschinen, insbesondere auf Turbinenschaufelfräsmaschinen einsetzbar ist. Es ist zudem bevorzugt, dass die Klemmbacken quer zur Rotationsachse verlagerbar sind. Auf diese Weise können auch Rohlinge in der Spannvorrichtung festgelegt werden, deren Endfläche sich außerhalb der Rotationsachse befindet.

Es ist vorgesehen, dass die Klemmbacken mindestens ein Andruckelement zur Festlegung des Turbinenschaufelrohlings aufweisen. Das Andruckelement kann ein in der Klemmbacke angeordnetes Befestigungsmittel, bevorzugt eine Schraube, besonders bevorzugt eine Verstellschraube sein. Um die bei der Einspannung auf die Turbinenschaufel wirkende Kräfte zu reduzieren, ist es bevorzugt, dass mehrere Andruckelemente in der Klemmbacke angeordnet sind. Weiterhin ist es vorteilhaft, dass die Klemmbacken als Andruckelement ausgestaltet sind und der Festlegung des Turbinenschaufelrohlings dienen und eine der Form des Turbinenschaufelrohlings entsprechende Form aufweisen, insbesondere eine konkave oder konvexe Form. Es hat sich als besonders vorteilhaft herausgestellt, dass die Klemmbacken eine wellenförmige Oberflächenprofilierung aufweisen.

Um eine Beschädigung der Oberfläche des Turbinenschaufelrohlings beim Einspannen zu vermeiden, ist es vorgesehen, dass das Andruckelement an einer Kontaktfläche mit dem Turbinenschaufelrohling eine Schutzschicht aufweist. Die Schutzschicht ist insbesondere zwischen Andruckelement und Turbinenschaufelrohling angeordnet und ist vorzugsweise aus einem elastischen Material gefertigt. Als Material kann beispielsweise ein Kunststoff, insbesondere ein Elastomer verwendet werden.

Ferner ist bevorzugt, dass eine Fixiereinheit an dem Turbinenschaufelrohling angebracht wird, so dass der Turbinenschaufelrohling in eine reproduzierbare Horizontalmittenachse und einem definierten Axialanschlag gebracht vorliegt. Die Fixiereinheit ist mittels Befestigungsmitteln an den Klemmbacken anbringbar, wobei die Fixiereinheit bevorzugt Andruckelemente aufweist, mit denen der Turbinenschaufelrohling fixierbar ist.

Die Erfindung betrifft auch ein Verfahren zum Einspannen und Bearbeiten eines Turbinenschaufelrohlings in einer Bearbeitungsmaschine, wobei ein zu bearbeitender Turbinenschaufelrohlings in einem Vorbereitungsschritt in einer Bearbeitungsmaschine mit einer Grundspanneinheiten, an der eine erste und eine zweite Klemmbackenaufnahmeeinrichtung gelagert sind und an der ersten Klemmbackenaufnahmeeinrichtung eine erste Klemmbacke und an der zweiten Klemmbackenaufnahmeeinrichtung eine zweite Klemmbacke gelagert sind, zwischen den Klemmbacken klemmend festgelegt wird, wobei in einem ersten Bearbeitungsschritt ein Bearbeitungswerkzeug durch eine in der ersten Klemmbackenaufnahmeeinrichtung vorliegende erste Bearbeitungswerkzeugdurchführungsausnehmung senkrecht zu der ersten Klemmbackenaufnahmeeinrichtung durchgeführt wird, und so die Bearbeitung eines ersten, zwischen den Klemmbackenaufnahmeeinrichtung liegenden, unteren Kantenradiusbereichs des Turbinenschaufelrohlings erfolgt, wobei in einem nachfolgenden zweiten Bearbeitungsschritt das Bearbeitungswerkzeug durch eine in der zweiten Klemmbackenaufnahmeeinrichtung vorliegende zweite Bearbeitungswerkzeugdurchführungsausnehmung senkrecht zu der zweiten Klemmbackenaufnahmeeinrichtung durchgeführt wird, und so die Bearbeitung eines zweiten, zwischen den Klemmbackenaufnahmeeinrichtung liegenden, unteren Kantenradiusbereichs des Turbinenschaufelrohlings erfolgt. Durch das erfindungsgemäße Verfahren erfolgt insbesondere eine Bearbeitung des unteren Kantenradius des Turbinenschaufelrohlings. In einem weiteren Bearbeitungsschritt erfolgt dann vorteilhafterweise eine Bearbeitung eines oberen Kantenradiusbereichs des Turbinenschaufelrohlings. Hierfür muss der Turbinenschaufelrohling nicht neu eingespannt werden. Es ist zudem bevorzugt, dass in einem weiteren Bearbeitungsschritt eine Bearbeitung eines seitlichen Kantenradiusbereichs des Turbinenschaufelrohlings erfolgt. Weiterhin ist bevorzugt, dass eine Fixiereinheit an am Turbinenschaufelrohling angebracht wird, so dass der Turbinenschaufelrohling in eine reproduzierbare Horizontalmittenachse und einem definierten Axialanschlag gebracht vorliegt. In einem weiteren Bearbeitungsschritt kann eine Bearbeitung der beiden Turbinenschaufelgeometriebereiche, insbesondere der Fuß- und Kopfbereiche des Turbinenschaufelrohlings erfolgen.

Nachfolgend werden beispielhafte Ausgestaltungen des Erfindungsgedankens näher erläutert, die in den Zeichnungen dargestellt sind. Es zeigt
- Fig. 1, Fig. 2: Beispielhafte Ausgestaltung einer Spannvorrichtung
- Fig. 3 bis Fig. 5: Varianten einer Turbinenschaufel
- Fig. 6, Fig. 7: Schematische Darstellung eines eingespannten Turbinenschaufelrohlings mit Fixiereinheit
- Fig. 8: Weitere schematische Darstellung einer beispielhaften Spannvorrichtung mit Profilgrundbacken
- Fig. 9 bis Fig. 11: Beispielhafte Ausgestaltungen eines Andruckelementes
- Fig. 12 bis Fig. 14: Beispielhafte Bearbeitung eines Turbinenschaufelrohlings
- Fig. 15: Beispielhafte Spannbacken für Snabberbearbeitung
- Fig. 16, Fig. 17: Beispielhafte Radiuskonturfräsen mit Radiusprofilfräser

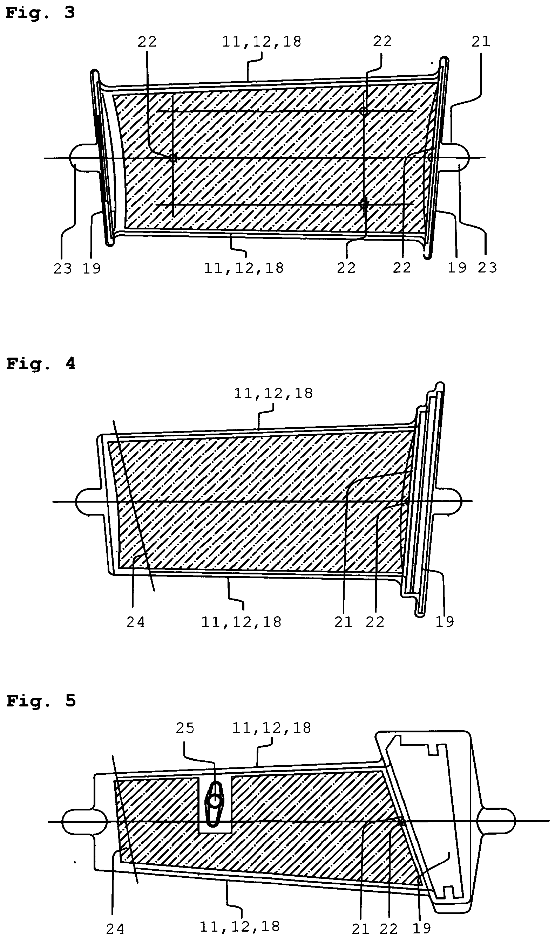

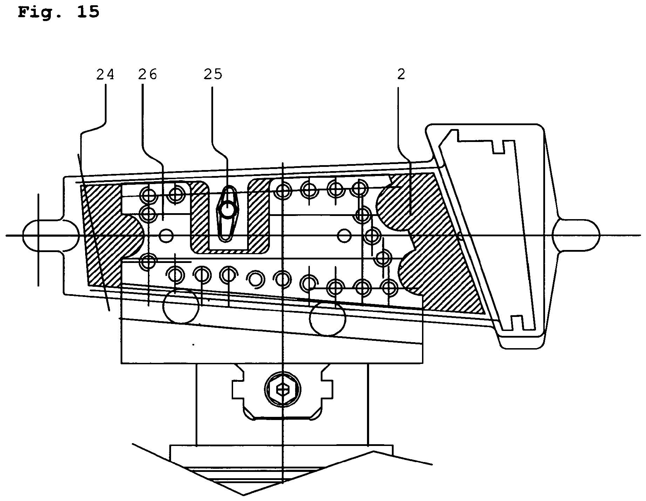

Die Spannvorrichtung 1 und das erfindungsgemäße Verfahren ermöglichen ein einmaliges Einspannen von Turbinenschaufelrohlingen 2 mit fertigen Profilblattgeometrien, wobei alle vier Turbinenschaufelbereiche, wie die beiden Turbinenschaufelenden 19 (Kopf- und Fußgeometrien) (seitlicher Kantenradiusbereich), sowie die Ein- und Austrittskantenradien 11, 12, 18 des Profilblattbereiches (das heißt, untere und obere Kantenradiusbereich) in einer Aufspannung bearbeitet werden können (siehe beispielsweise Fig. 3 bis Fig. 5). Ein Turbinenschaufelrohling weist insbesondere ein Blattübergangsbereich 21 und mehrere Profilmesspunkte 22 auf. Außerdem liegen seitlich der Schaufel 2 Schmiedefixpunkte 23 der Turbinenschaufel 2. Die Turbinenschaufelkopfscherung 24 ist in Fig. 4 und Fig. 5 schematisch dargestellt. Der Turbinenschaufelsnabber 25 ist schematisch in Fig. 5 dargestellt und dessen Einspannung in Fig. 15.

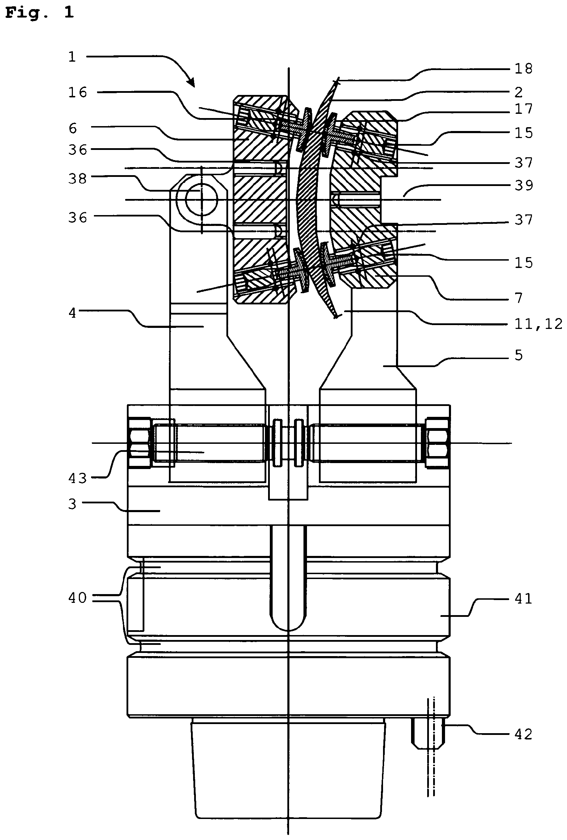

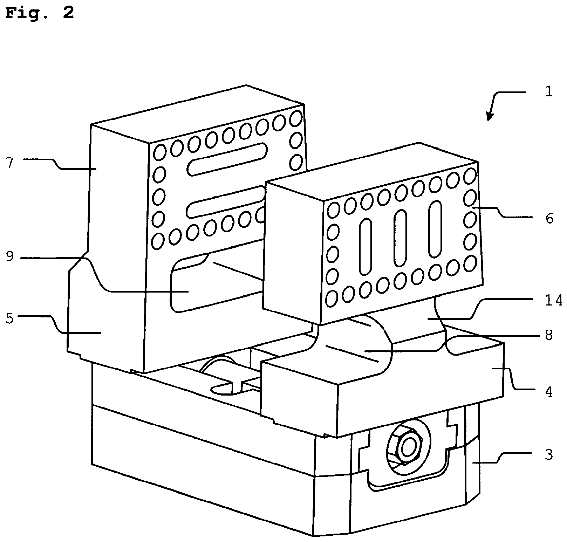

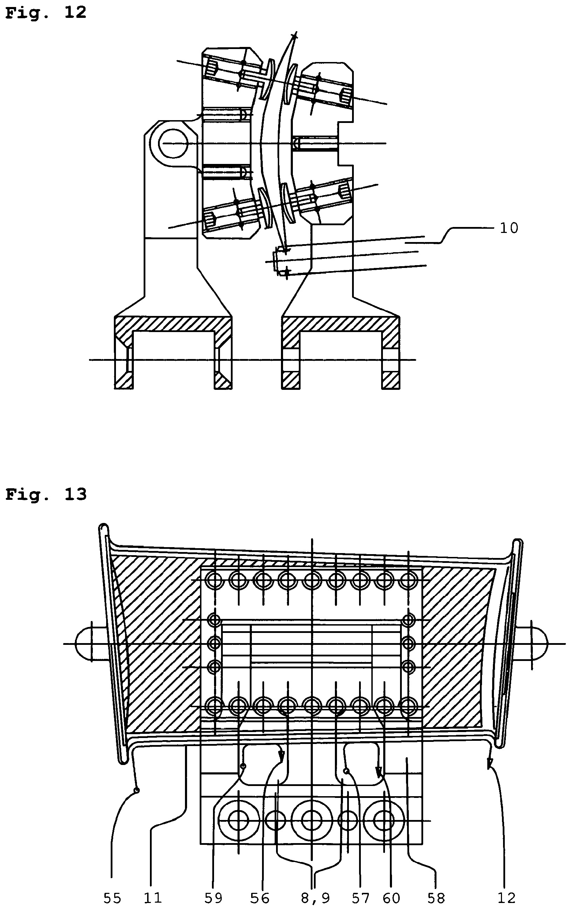

Im Sinne der Erfindung bezeichnen Igelprofilgrundbacken 26 Klemmbacken 6, 7 mit mehreren Andruckelementen 15, die als Befestigungsmittel, insbesondere Verstellschrauben ausgestaltet sind. Des Weiteren bezeichnen im Sinne der Erfindung Profilgrundbacken 27 Klemmbacken 6, 7, die lediglich ein Andruckelement 15 aufweisen, wobei die Klemmbacke 6, 7 an sich als Andruckelement 15 ausgestaltet ist und ein flächiges Andrücken oder Klemmen der Rohlinge erfolgt. Vorteilhafterweise können Turbinenschaufelrohlinge 2 mit fertigen oder definierter Aufmaß- und Profilblattgeometrie beliebiger Art und Form in die Spannvorrichtung 1 aufgenommen werden (zum Beispiel Fig. 1 und Fig. 3 bis Fig. 5). Zudem ist eine Turbinenschaufelablängung möglich (siehe Fig. 1 bis Fig. 11). Die Fig. 3 bis Fig. 5 zeigen verschiedenartige Turbinenschaufelgeometrien. Überraschenderweise kann auch eine dem Fachmann bekannte Snabberbearbeitung erfolgen, da eine geometrische Anpassung der Igel- 26 bzw. Profilgrundbacken 27 möglich ist (zum Beispiel Fig. 15). Die Igelgrundbacken 26 können unterschiedlichen Profilblattgeometrietypen angepasst werden (zum Beispiel Fig. 1, Fig. 2). Fig. 2 zeigt eine bevorzugte Ausgestaltung der Klemmbackenaufnahmeeinrichtung 4, 5. Die erste und zweite Bearbeitungswerkzeugdurchführungsausnehmung 8, 9 sind relativ zu einer Querachse 13 der Klemmbackenaufnahmeeinrichtung 4, 5 versetzt angeordnet. Um zu vermeiden, dass das Bearbeitungswerkzeug 10 schräg eingeführt werden muss, können die Bearbeitungswerkzeugdurchführungsausnehmungen 8, 9 versetzt zueinander, das heißt insbesondere nicht deckungsgleich angeordnet werden. Hierdurch kann das Bearbeitungswerkzeug 10 im Wesentlichen senkrecht zu den Klemmbackenaufnahmeeinrichtungen 4, 5 durch die Bearbeitungswerkzeugdurchführungsausnehmungen 8, 9 geführt werden. Hierdurch ist einfache und schnelle Bearbeitung des unteren Kantenradius möglich, ohne den Turbinenschaufelrohling 2 umspannen zu müssen. Das heißt, es wird mit dem Bearbeitungswerkzeug 10 zuerst ein erster Kantenradius 11 bearbeitet. Anschließend wird der zweite Kantenradius 12 dadurch bearbeitet, dass das Bearbeitungswerkzeug 10 durch die zweite Bearbeitungswerkzeugdurchführungsausnehmung 9 hindurchtritt. Der Turbinenschaufelrohling 2 wird um 180° gedreht und der fehlende, nicht gefräste Bereich des zweiten Kantenradius 12 wird in einem abschließenden Bearbeitungsschritt bearbeitet (siehe auch Fig. 13). Die Bearbeitung des Rohlings 2 kann somit ohne ein Umspannen erfolgen. Zudem hat sich herausgestellt, dass die auf den Rohling 2 wirkenden Kräfte durch die Verwendung der erfindungsgemäßen Klemmbacken 6, 7, insbesondere der Igelgrundbacken 26 und Profilgrundbacken 27 erheblich reduziert sind und eine Beschädigung des Turbinenschaufelrohlings 2 verhindert wird. Es kann jedoch auch bevorzugt sein, die Bearbeitungswerkzeugdurchführungsausnehmungen 8, 9 gegenüberliegend, insbesondere deckungsgleich anzuordnen.

Durch die vorteilhafte Spannvorrichtung 1 und das bevorzugte Verfahren können Turbinenschaufelrohlinge 2 mit einer fertigen Profilblattgeometrie eingespannt und weiter bearbeitet werden, ohne dass durch das Einspannen eine Beschädigung der fertigen Profilblattkontur erzeugt wird. Die Klemmbacken 6, 7 (insbesondere die Igelprofilgrundbacke 26) weisen neben mehreren Andruckelementen 15, die beispielsweise als Igelverstellschraubenelemente 30 ausgestaltet sein können, Einstellschrauben 36 und Verstellschraubensicherungen 37 auf. Die Klemmbacken 6, 7 können mittels einem Zylinderdorn 38 an einer Klemmbackenaufnahmeeinrichtung 4, 5 angelenkt sein. Zudem weist die Spannvorrichtung 1, beziehungsweise mindestens eine Klemmbacke 6, 7 eine Passnut 39 für die Anbringung einer Fixiereinheit 20 auf. Über Greiferrillen 40 wird die Spannvorrichtung 1 über ein Maschinenadaptersystem 41 und beispielsweise einem Schwertstift 42 zur Adapterpositionierung in einer Bearbeitungsmaschine (nicht dargestellt) fixiert. Die Grundspanneinheit 3 kann über eine Anzugsgewindespindel 43 angezogen werden.

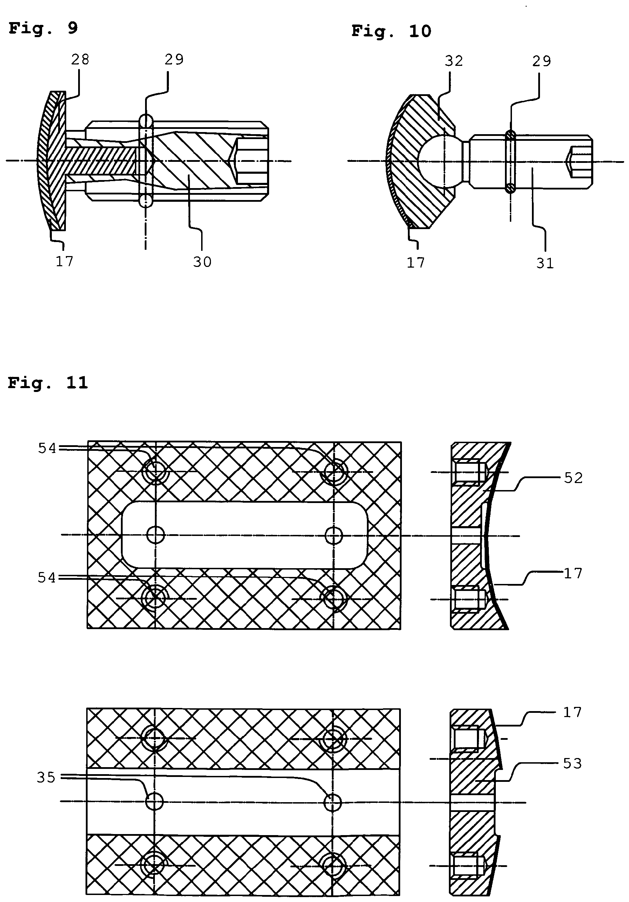

Die Andruckelemente 15 der Igelprofilgrundbacken 26, beziehungsweis die Profilgrundbackenvarianten 27 können entsprechend der Turbinenschaufelrohlinge 2 mit fertigen Profilblattgeometrien ausgestaltet sein (siehe insbesondere Fig. 9 bis Fig. 11). Um die Oberfläche des Turbinenschaufelrohlings 2 bei dem Einspannen nicht zu beschädigen, kann das Andruckelement 15 an einer Kontaktfläche 16 mit dem Turbinenschaufelrohling 2 mit einer elastischen Schutzfolie 17 beschichtet sein, wobei auch eine Beschichtung der Kontaktflächen 16 von Schutzkappen 28 vorgesehen sein (siehe Fig. 9). Das Andruckelement 15 kann insbesondere als Igelverstellschraube mit Einsteckbohrung 30 (IVSE) ausgestaltet sein. Außerdem kann das Andruckelement 15 als Igelverstellschraube mit Kugelgelenkkopf 31 (IVSE) ausgestaltet sein (siehe Fig. 9 und Fig. 10). Die Igelverstellschraube mit Kugelgelenkkopf 31 kann eine schwenkbare Aufsteckschutzkappe 32 aufweisen. Die Andruckelemente 15 können eine Gewindedrehsicherung 29 aufweisen. Zudem können Profilgrundbacken 27 zum Ausgleich von Produktionstoleranzen des Profilblattbereiches, wie sie beispielsweise beim Feinschmieden üblich sind, verwendet werden, so dass es nicht zu Verformungen oder Beschädigungen der Turbinenschaufel 2 kommt. Durch eine tangentiale Lage der Igelverstellschraubenelemente 26 zum gekrümmten Profilblattbereich kann eine Verschiebung oder Aufbietung des Profilblattbereiches beziehungsweise der gesamten Turbinenschaufel 2 verhindert werden.

Überraschenderweise ist mittels der Spannvorrichtung 1 eine Snabberbearbeitung 25 durchführbar, da eine geometrische Anpassung der Igelgrundbacken 26 beziehungsweise Profilgrundbacken 27 möglich ist (Fig. 15). Die Turbinenschaufelkopfscherung 24 ist ebenfalls in Fig. 15 angedeutet.

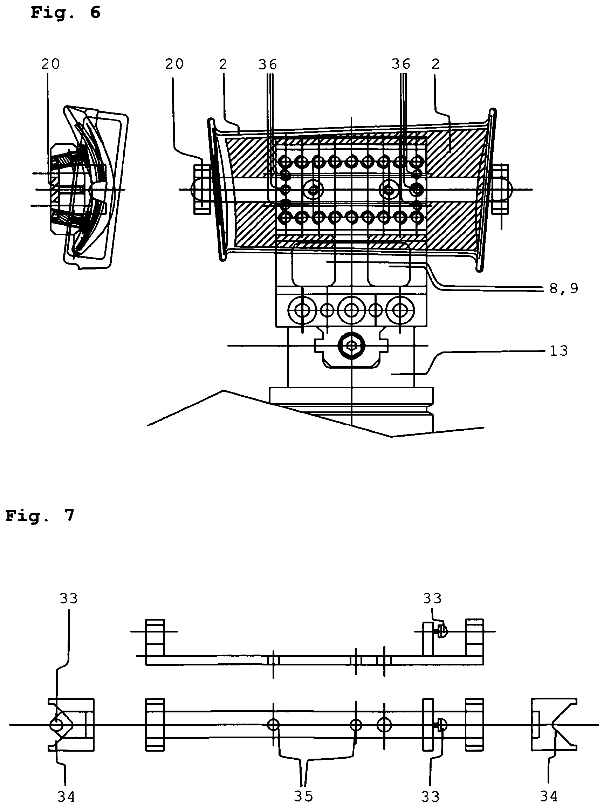

Durch die Verwendung einer Fixiereinheit 20 wird der Turbinenschaufelrohling 2 immer in eine reproduzierbare Horizontalmittenachse und einem definierten Axialanschlag gebracht (Fig. 6 und Fig. 7). Die Fixiereinheit 20 weist einen Axialanschlag 33 für einen Übergangsbereich und ein Einlegeprisma 34 für die Horizontallage des Turbinenschaufelrohlings 2 auf. Mittels Bohrungen 35 und entsprechenden Befestigungsmitteln, beispielsweise Schrauben, kann die Fixiereinheit 20 an den Klemmbacken 6, 7 befestigt werden. Der Turbinenschaufelrohling 2 mit dem fertig bearbeiteten Profilblattbereich kann so einfach und schnell an allen Seiten bearbeitet werden.

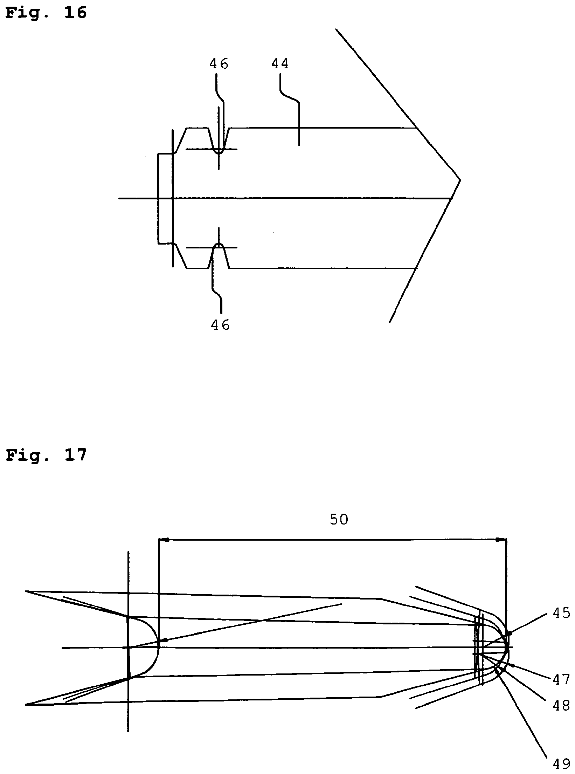

Durch den Einsatz eines Spezialradiusprofilfräswerkzeuges 44 oder Kugelkopffräsers (Lollipop) 45 (insbesondere Fig. 16 und Fig. 17) ist sowohl die oben wie auch die unten liegende Profilblattkantenradien 46 absatzfrei herstellbar. Durch den Einsatz der genannten Werkzeuge kann sowohl der oben wie auch der unten liegende Profilblattkantenradius 46 in seiner Radiusgröße (verschiedene Fräsbahnen 47, 48, 49) über die Profilblattlänge beliebig vergrößert oder verkleinert werden (zum Beispiel Fig. 17). Variable Radiengrößen 50 sind möglich. Es können unterschiedliche Radiengrößen (Fig. 17, R1, R2) bereitgestellt werden, wobei durch das Bearbeitungswerkzeug 10 sowohl die oben wie auch die unten liegende Profilblattkantenradien 11, 12, 18 in einer Radiusgröße über die Profilblattlänge vergrößert oder verkleinert werden kann.

Die Spannvorrichtung 1 zur Durchführung des Verfahrens soll für folgende Turbinenschaufelrohlinge 2 geeignet sein, bei denen jeweils die Profilblattbereiche fertigbearbeitet sind:
1.) Stehende Turbinenschaufel- mit Kopf- und Fußgeometrien
2.) Rotierende Turbinenschaufel- mit Fußgeometrien
3.) Rotierende Turbinenschaufel- mit Fußgeometrien und Snabber
4.) Aufmaßgeometrieschaufeln (Turbinenschaufel mit einem Produktionsaufmaß auf allen Flächen. Bei Ihnen ist ebenfalls eine Spannung im Profilblattbereich notwendig. Dieser Profilblattbereich kann mittels anderer Fertigungsverfahren wie zum Beispiel elektrochemisches erodieren erzeugt werden.

Zudem sollte die Spannvorrichtung 1 so gestaltet sein, dass sie auf den unterschiedlichsten Bearbeitungszentren einsetzbar ist und auf Standard-Zentrumsspannsystemen direkt eingesetzt oder auf vorhandene Spannbackengrundkörper aufgesteckt werden kann. Hierfür weist insbesondere die Grundspanneinheit 3 oder die Klemmbackenaufnahmeeinrichtungen 4, 5 entsprechende Adaptermodule auf, so dass diese aufgesteckt oder direkt eingesetzt werden können.

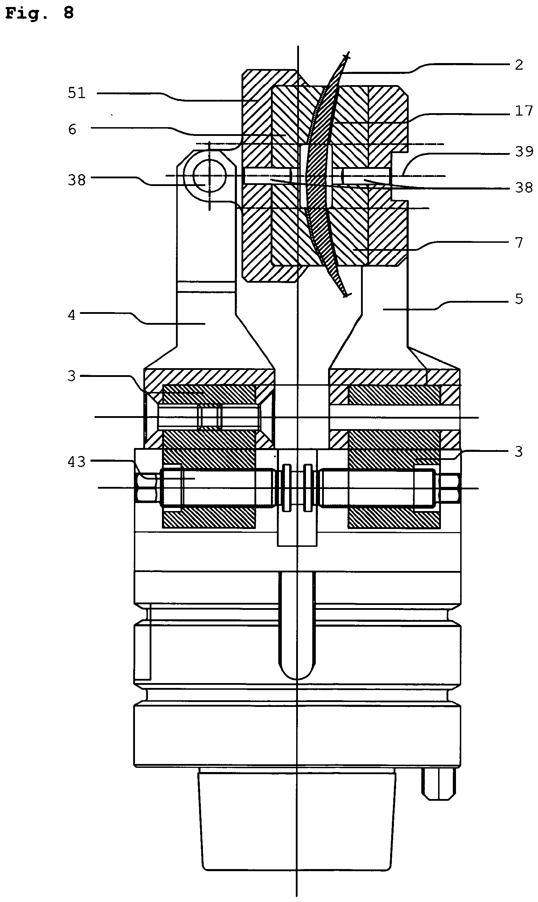

Die bevorzugte Spannvorrichtung 1 für Turbinenschaufelrohlinge 2 sollte modular aufgebaut sei, so dass mit ihm alle Schaufelgrößen abgedeckt werden können. Es kann beispielsweise aus folgenden Grundmodulen bestehen (Fig. 1, Fig. 8) :
1. Maschinenadaptersystem 41 (beliebige Standardschnittstelle mit oder ohne Greiferrille 40 für einen automatischen Wechsel)
2. Zentrumsgrundspannereinheit, die im Sinne auch als Grundspanneinheit 3 bezeichnet wird (beliebiger Hersteller mit auswechselbaren Spannbackensystemen)
3. Fester Profilspanngrundbacken, der im Sinne der Erfindung als zweite Klemmbackenaufnahmeeinrichtung 5 bezeichnet wird (F-PSGB) für die Aufnahme der Igelgrundbacken 26 (IGB) oder Profilgrundbacken 27 (PGB)
4. Fester Drehgrundbügel, der im Sinne der Erfindung als erste Klemmbackenaufnahmeeinrichtung 4 bezeichnet wird (F-DGB)
5. Igelgrundbacken 26 (IGB) oder Profilgrundbacken 27 (PGB)
6. Zylinderdorn 42 (ZD)
7. Igelgrundbacken (IGB-KK) 26 für konkave Turbinenschaufel-Profilblattbereiche
8. Igelgrundbacken (IGB-KV) 26 für konvexe Turbinenschaufel-Profilblattbereiche
9. Andruckelemente 15, insbesondere Igelverstellschraubelemente (IVSE)
10. Schutzschicht 17 der Andruckelemente 15, insbesondere Schutzkappen 28 für Igelverstellschraubelemente

Zudem können folgende Bauteile vorteilhaft sein (Fig. 4):
11. Profilgrundbacken 27 (PGB-KK) für konkave Turbinenschaufel-Profilblattbereiche, die Profilgrundbacken 27 (Klemmbacken 6, 7) können an einem beweglichen Profilgrundbacken 51 angeordnet sein
12. Profilgrundbacken 27 (PGB-KV) für konvexe Turbinenschaufel-Profilblattbereiche
13. Beschichtungsschutzfolie für Profilgrundbacken
14. Fixiereinheit 20 (FE) zur Bestimmung der Mittellage und des Axiallage der Turbinenschaufelrohlinge 2im Spannsystem (Fig. 6 und Fig. 7)
15. Einstellschrauben 36 (ES) für die Turbinenschaufelrohlinge-Positionierung (Fig. 1)
16. Verschraubungen
17. Verschraubungen 38 , 43 zur Befestigung der Klemmbacken 6, 7 an einer Klemmbackenaufnahmeeinrichtung 4, 5 und zur Befestigung der Klemmbackenaufnahmeeinrichtungen an einer Grundspanneinheit 3

Durch eine optimale Kombination dieser Grundmodule lassen sich nahezu alle Spannprobleme bei der Herstellung von Turbinenschaufel aus den verschiedensten Turbinenschaufelrohlinge-Typen realisieren.

Die Spannvorrichtung 1 umfasst insbesondere ein Profilspannsystem für die Einmalspannung (Fig. 1). Es besteht zum einen aus dem Maschinenadaptersystem 41 und der Grundspanneinheit 3. Der Rundlauf beider Systeme wird durch einen Zentrumszylinderstift gewährleistet. Das Maschinenadaptersystem 41 stellt das Verbindungsstück zwischen der Maschinendrehachse und der Grundspanneinheit 3 dar. Auf beziehungsweise in der Grundspanneinheit 3 befinden sich der feste Profilspannbacken 5 und der Drehgrundbügelspannbacken 4 der wiederum den beweglichen Profilspanngrundbacken 6, im Sinne der Erfindung eine erste Klemmbacke 6 mittels eines Zylinderdorns 38 aufnimmt. Der Turbinenschaufelrohlinge 2 wird zwischen den beiden Igelgrundspannbacken 6, 7 durch die Anzugsgewindespindel 43 der Grundspanneinheit 3 gespannt. Diese Anzugsgewindespindel 43 kann je nach Aufgabenstellung in der Grundspanneinheit 3 als ein
- immer zum Zentrums spannendes System oder
- floatend spannendes System, mit einem Verschiebespiel der Anzugsgewindespindel 43 in der Grundspanneinheit 3 von bis zu 2mm
je nach Bedarf ausgelegt sein. Diese Grundspanneinheit 3 wird auf ihrer Unterseite an Maschinenadaptersystem 41 fixiert und befestigt. Dies Maschinenadaptersystem 41 kann beispielsweise eine HSK-Schnittstelle mit Innenspanner sein, ähnlich wie bei Werkzeugspannsystemen. Es können hier aber auch andere auf dem Markt befindliche Schnittstellen, wie zum Beispiel Steilkegel, etc. zum Einsatz kommen. Hat man große, beziehungsweise sehr schwere Turbinenschaufeln zu spannen, dann verschraubt man dieses Maschinenadaptersystem 41 noch zusätzlich an der Maschinendrehachse. Hierdurch wird sichergestellt, dass dieses Grundspanneinheit 3 absolut zentrisch zur Maschinendrehachse läuft. Die Winkelpositionierung des Grundspanneinheit 3 zur Maschinenadaptersystem 41 übernimmt üblicherweise ein Schwertstift 42. Der Rundlauf beider Systeme wird durch einen Zentrumszylinderstift gewährleistet. Auf dem Maschinenadaptersystem 41 können auch zum automatischen Wechsel sogenannte Greiferrillen 40 angebracht sein.

Um das gesamte Turbinenschaufelspektrum abdecken zu können, werden üblicherweise mehrere Grundspannbackengrößen benötigt. Diese richten sich vor allem nach dem gewünschten Spann-/Klemmmoment, der Turbinenschaufelgeometrie, der zu spannenden kleinen oder großen Turbinenschaufel 2 und nach der Igelgrundbacken- 26 bzw. Profilgrundbacken 27 - Spannfläche. Beide Grundspannbackenbreiten sind so ausgeführt, dass man die untere eingespannte Profilradienkante entweder von rechts der Turbinenschaufel 2 oder von links bearbeiten kann. Hierfür sind auf der einen Seite der Spannvorrichtung 1 die beiden Spannstege des beweglichen Profilspanngrundbackens 6, 7 nach außen gelegt (Fig. 12 bis Fig. 16) und am festen Profilspanngrundbacken 6, 7 ist der eine Spannsteg zentrisch in der Mitte, also nach innen gelegt worden. Die Überdeckungsbreite ist so breit, dass man in der Lage ist, jedes Radienprofilwerkzeug oder Kugelkopfwerkzeug mit einer Überdeckung z.B. auf der rechten Profilbahn von mindestens 1mm zur linken Profilbahn fahren kann. Hierdurch wird sichergestellt, dass man diesen durch die Grundspannbackenstege eingeschränkten Bereich entweder von der einen oder von der anderen Seite bearbeiten kann ohne dass auf die Profilradienkanten ein Absatz oder Marke aufweisen.

Bei den Aufsatzbacken gibt es die beiden unterschiedlichen Grundprinzipien mit denen man auf den fertigbearbeiteten Blattprofilflächen beschädigungsfrei spannen kann. Dies sind zum einen die sogenannten Igelgrundbacken 26 und zum anderen die Profilgrundbacken 27, wobei diese Klemmbacken 6, 7 mit mindestens einem Andruckelement 15 darstellen.

Die beiden Igelgrundbacken 26 für die Konkav- und Konvexseite sind so aufgebaut, dass die beiden Igelsegmente jeweils Tangential zum komplexen Turbinenschaufel-Blattprofil bzw. Aus- und Eintrittskantenradien des Turbinenschaufelprofilblattbereiches stehen, d.h. die Grundkörper der beiden Igelgrundbacken 26 werden der Profilblattbereichform angepasst. Hierdurch wird vermieden dass beim Spannen Querkräfte auftreten, die das Blattprofil aufbiegen oder verschieben.

Die Igelgrundbacken 26 haben für die Abbildung des komplexen Profilblattbereiches mindestens zwei Spannreihen, wobei eine parallel zur Austrittskante und die andere parallel zur Eintrittskante des Profilblattbereiches verlaufen. Bei großen Turbinenschaufelrohlingen 2 können es auch mehrere Spannreihen sein. Diese Spannreihen werden so ausgebildet, dass man mittels mehreren Igelverstellschraubelementen, die im Sinne der Erfindung als Andruckelemente 15 bezeichnet werden, die man nach innen bis zur Blattprofilkontur verändert, und somit abbildet. Auf dem Kopf dieser Igelverstellschraubelemente 15 wird, wenn erforderlich, entweder eine feste 28 oder verdrehbare Schutzkappe 32 aufgesetzt, um sicher zu stellen, dass die Blattprofiloberfläche flächenbezogen berührt wird (siehe Fig. 9 und Fig. 10). Da diverse Turbinenschaufelmaterialien mit verschiedenen Schutzkappenmaterialien eine chemische Reaktion eingehen, werden hier geeignete Materialpaarungen ausgewählt. Ferner wird die Kontaktfläche 16 diese Schutzkappen 28, 32 zum Blattprofil noch mit einer elastisch verformbare Schutzschicht 17 oder Beschichtung versehen um deren Verschleiß zu minimieren und Unebenheiten oder kleiner Maßtoleranzfehler des Profilblattbereiches, welche vom Feinschmiedeprozess her stammen können, ausgleichen zu können. Bei groben Oberflächentoleranzfeldern kann die verdrehbare Schutzkappe 28, 32 entfallen. Hier wird direkt auf den leicht geformten Aufsteckkopf des Gewindestiftes die Schutzfolie etc. aufgebracht.

Die Blattprofileinstellung der beiden Igelgrundbackenpaare 6, 7, 26 erfolgt einmal am Anfang einer Bestückung jeweils für eine definierte Blattprofilform. Hierfür sind an den beiden äußeren Igelgrundbacken 26 auf der einen Seite zwei und auf der anderen Seite ein Gewindestift im Mittenbereich angebracht. Zur Einstellung der Spanngewindestifte benötigt man eine Fixiereinheit 20, die zur Aufgabe hat, dass die Turbinenschaufelrohlinge 2 in der Mitte der Igelgrundbacken 26 horizontal liegen, sowie einen reprozierbaren Axialanschlag hat. Diese Fixiereinheit 20 ist so konzipiert, dass sie, meist von hinten, reproduzierbar auf den festen Profilspanngrundbacken 6, 7 aufgesteckt oder angeschraubt wird. Man legt nun die Turbinenschaufelrohlinge 2 so zwischen die beiden Igelgrundbacken 26 ein, dass die beiden Nasen der Turbinenschaufelrohlinge 2 in die beiden V-Zentren der Fixiereinheit 20 liegen und der Fußübergansbereich am Axialschlag der Fixiereinheit 20 anliegt. Nun schraubt man die beiden Profilspanngrundbacken 6, 7 so weit wie möglich zusammen ohne dass sie die immer noch leicht verdrehbare Turbinenschaufelrohlinge 2 in der Fixiereinheit 20 berührt. Mit den zwei innenliegenden Einstellschrauben 36 auf der einen Igelgrundbackenseite fixierte man nun die Turbinenschaufelrohlinge 2 so, dass man leicht mit einem Werkzeug, möglichst horizontal, die unten liegende Profilradiuskante erreichen kann. Die andere Einstellschraube 36 auf der anderen Igelgrundbackenseite wird nun so weit angestellt, dass der Turbinenschaufelrohlinge 2 genau in der Fixiereinheit 20 liegen. Danach werden dann an dem gegenüberliegenden Igelgrundbacken 26 die anderen beiden Gewindestifte soweit nach innen gedreht, bis die Turbinenschaufelrohlinge 2 zwischen jeweils drei Einstellschrauben 36 fixiert ist. Danach wird am zweiten Einstellschraubenpaar durch herausdrehen der letzten Einstellschraube 36 bis zum Kontakt auf der Profilblattfläche herausgedreht. Somit ist dann der Turbinenschaufelrohling 2 eindeutig zwischen den sechs Einstellschrauben 36 der beiden Igelgrundbacken 26 fixiert.

Anschließend werden dann die anderen Igelverstellschraubelemente, insbesondere Andruckelemente 15 der zwei oder mehrere Gewindereihen auf Kontakt zur Blattprofiloberfläche herausgefahren. Wenn diese alle auf Blattprofilkontur herausgefahren wurden, werden die sechs für die Turbinenschaufelfixierung benötigten Einstellschrauben 36 zurückgefahren, da diese beim späteren Spannen nur eine Turbinenschaufel Blattbeschädigung oder Verbiegung hervorrufen würden.

Das eigentliche Spannen des Turbinenschaufelrohlinges 2 erfolgt nach der Entnahme der Fixiereinheit 20 durch das Anziehen der Anzugsgewindespindel 43 der Grundspanneinheit 3 mit einem definierten Drehmoment, wodurch die beiden Igelgrundbacken 26 zusammengefahren werden. Durch das Drehgelenk an festen Drehgrundbügel zum beweglichen Igel- oder Profilspanngrundbacken 26, 27 wird zum Einen sichergestellt, dass die Spannkräfte oben und unten, auch bei leicht ausgeformten Igelgrundbacken 26 immer gleich sind. Zum anderen wird eine Verformung vermieden. Das radiale Spiel, das jedes Spanbackengrundsystem besitzt, gleicht hierbei Längen-Dickentoleranzen zwischen den einzelnen Schmiedeschaufelrohlinge aus.

Beim späteren Neuspannen eines Turbinenschaufelrohlinges 2 muss somit kein Fixier- bzw. Neueinstellvorgang durchgeführt werden, da die Folienbeschichtung der Schutzkappen bzw. der Profilgrundbackens 6, 7 die Dickentoleranzfelder der Profilblattbereiches eines Turbinenschaufelrohlinges 2 ausgleicht. Will man einen anderen Turbinenschaufelrohlingetyp mit diesen Igelgrundbacken 26 spannen, muss, wenn das Igelgrundbackenpaar 26 von der Geometriegröße passt, eine Neueinstellung der Igelverstellschraubeneinstellung vorgenommen werden.

Die Profilgrundbacken (PGB) 6, 7, 27 gibt es in folgenden drei Varianten (Fig. 11):
a. Vollflächig PGB
b. Zentrumsleere PGB
c. Oben und untenliegende PGB-Leisten
Die Profilgrundbacken 27 können als konkave Profilgrundbacken 52 oder konvexe Profilgrundbacken 53 ausgestaltet sein und eine Schutzschicht 17 aufweisen. Zudem weisen sie Bohrungen 35 zur Anbringung der Fixiereinheit 20 auf und Verschraubungen zur Befestigung an einer Klemmbackenaufnahmeeinrichtung oder einem beweglichen Profilgrundbacken auf. Bei allen drei Varianten ist die Kontaktoberfläche zur Turbinenschaufelrohlingeprofilblattfläche als deren Negativ-Blattprofil abgebildet. Ferner wird diese Kontaktfläche 16, wie bei den Schutzkappen, mit einer elastisch verformbare Schutzfolie oder Beschichtung 17 versehen um deren Verschleiß zu minimieren und Unebenheiten oder kleiner Maßtoleranzfehler der Blattprofile ausgleichen zu können. Alle drei Profilgrundbackentypen, werden nach diversen Einsatzbedingungen jeweils auf den beiden Drehspanngrundbacken und Profilspanngrundbacken aufgebracht. Ihre korrekte Position wird ebenfalls durch das Aufstecken der Fixiereinheit 20 ermittelt. Nachdem die Turbinenschaufelrohlinge 2 in die Fixiereinheit 20 gelegt wurden und zwischen den beiden Profilgrundbackenleisten liegt, werden diese durch das Anziehen der beiden Spannbacken 6, 7 durch die Anzugsgewindespindel 43 der Grundspanneinheit 3 in die blattprofilbezogene Lage verschoben. Danach erfolgt von der Rückseite der Profilgrundbackens 6, 7 jeweils eine Fixierung durch zwei Stifte und eine Verschraubung mit dem festen Profilspanngrundbackens.

Nach dieser ersten Fixierung und Verschraubung sind diese Profilbackenaufsätze für diesen Turbinenschaufelrohlingtyps ohne weitere Fixierung einsetzbar. Das Einlegen eines neuen Turbinenschaufelrohlinges 2 erfolgt analog zum Wechsel des Igelgrundbackenspannersystems.

Es ist eine variable Radiuskonturfrästechnik möglich (Fig. 16, Fig. 17), die speziell für das Fräsen von teilweise einseitig verdeckten Radiusprofilen entwickelt wurde, wie es hier bei diesem Spannsystem der Fall ist, wobei ein Radienformfräser mit Einlaufflanken in das Profilblatt benutzt wird, deren Öffnungswinkel ca. 20° größer sind als die Profilblatttangentialen. Das eigentliche Fräsen erfolgt dann in max. drei Fräsbahnen 47, 48, 49. In der ersten Fräsbahn 47 wird die eine Radienseite und Auslaufflanke Zum Profilblatt hergestellt. In der zweiten Fräsbahn 48 wird dann die gegenüber liegende Radienseite und Auslaufflanke zur anderen Profilblattebene hergestellt. Die dritte Fräsbahn 49 ist nur dann notwendig, wenn der Radius selbst sehr engen Toleranzen unterliegt. Bei ihr werden dann die Radienkopfkonturen nachgefräst.

Soll der Radius über die Profilkantenlänger verändert werden, wird dies durch eine dementsprechende Verschiebung der Fräsbahnen eins und zwei erzielt. Die Werkzeugradiuskontur ist in einem solchen Fall nach dem größten zu erzeugenden Radius ausgelegt.

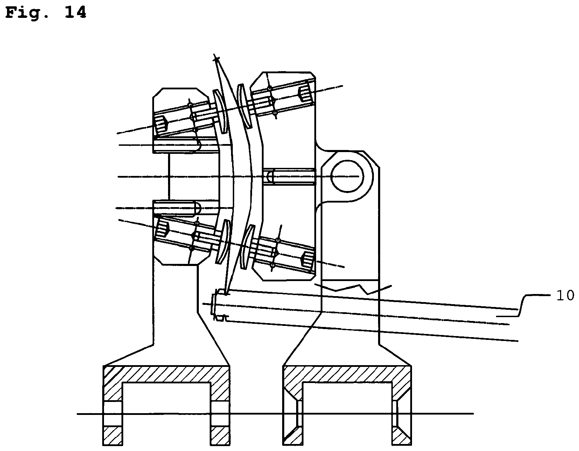

In den Fig. 12 bis Fig. 14 sind verschiedene Fräsbahnbeschreibungen für die Bearbeitung der unteren Kantenradiusbereiche des Turbinenschaufelrohlings dargestellt. Hierbei kann ein Bearbeitungswerkzeug 10 durch die erste Bearbeitungswerkzeugdurchführungsausnehmung 8 in der ersten Klemmbackenaufnahmeeinrichtung 4 zu dem Turbinenschaufelbereich dringen, der durch die Klemmbackenaufnahmeeinrichtung bedeckt ist. In einem zweiten Bearbeitungsschritt kann die Spannvorrichtung um 180° um eine Rotationsachse gedreht werden, so dass das Bearbeitungswerkzeug 10 durch die zweite Bearbeitungswerkzeugdurchführungsausnehmung 9 in der zweiten Klemmbackenaufnahmeeinrichtung 5 zu dem Turbinenschaufelbereich dringen, der ebenfalls durch die Klemmbackenaufnahmeeinrichtung bedeckt ist und zuvor nicht zugänglich war (siehe Fig. 2). Dadurch, dass die erste und zweite Bearbeitungswerkzeugdurchführungsausnehmung 8, 9 relativ zu einer Querachse 13 der Klemmbackenaufnahmeeinrichtung 4, 5 versetzt angeordnet sind, ist eine vollständige Bearbeitung möglich (siehe Fig. 6). Hierdurch ist eine vollständige Bearbeitung des Blattaustrittsradius, das heißt insbesondere des unteren Kantenradiusbereichs des Turbinenschaufelrohlings möglich. Es sind verschiedene Fräsbeschreibungen möglich: erste Fräsbahn: Start 55, Ende 56; zweite Fräsbahn: Start 57, Ende 58 ; dritte Fräsbahn: Start 59, Ende 60. Die dritte Fräsbahn erfolgt insbesondere nach einer 180° Drehung der Spannvorrichtung um eine Rotationsachse. Fig. 12 zeigt die erste Fräsbahn und zweite Fräsbahn eines Bearbeitungswerkzeugs 10 und Fig. 14 die dritte Fräsbahn, das heißt nach Drehung der Spannvorrichtung. Das heißt, es wird mit dem Bearbeitungswerkzeug 10 zuerst ein erster Kantenradius 11 bearbeitet (erste Fräsbahn). Anschließend wird der zweite Kantenradius 12 dadurch bearbeitet, dass das Bearbeitungswerkzeug 10 durch die zweite Bearbeitungswerkzeugdurchführungsausnehmung 9 hindurchtritt (zweite Fräsbahn). Der Turbinenschaufelrohling 2 wird um 180° gedreht und der fehlende, nicht gefräste Bereich des zweiten Kantenradius 12 wird in der dritten Fräsbahn bearbeitet. Die Bearbeitung des Rohlings 2 kann somit ohne ein Umspannen erfolgen. Zudem hat sich herausgestellt, dass die auf den Rohling 2 wirkenden Kräfte durch die Verwendung der erfindungsgemäßen Klemmbacken 6, 7, insbesondere der Igelgrundbacken 26 und Profilgrundbacken 27 erheblich reduziert sind und eine Beschädigung des Turbinenschaufelrohlings 2 verhindert wird.

## Patentansprüche

1. Spannvorrichtung (1) zum Einspannen eines Turbinenschaufelrohlings (2) in einer Bearbeitungsmaschine mit einer Grundspanneinheit (3), an der eine erste und eine zweite Klemmbackenaufnahmeeinrichtung (4, 5) gelagert sind, wobei an der ersten Klemmbackenaufnahmeeinrichtung (4) eine erste Klemmbacke (6) und an der zweiten Klemmbackenaufnahmeeinrichtung (5) eine zweite Klemmbacke (7) gelagert sind und wobei der Turbinenschaufelrohling (2) zwischen den Klemmbacken (6, 7) klemmend festgelegt werden kann, wobei die erste Klemmbackenaufnahmeeinrichtung (4) mindestens eine erste Bearbeitungswerkzeugdurchführungsausnehmung (8) und die zweite Klemmbackenaufnahmeeinrichtung (5) mindestens eine zweite Bearbeitungswerkzeugdurchführungsausnehmung (9) aufweist, so dass ein Bearbeitungswerkzeug (10) zur Bearbeitung eines ersten zwischen den Klemmbackenaufnahmeeinrichtungen (4, 5) liegenden unteren Kantenradiusbereichs (11) des Turbinenschaufelrohlings (2) durch die erste Bearbeitungswerkzeugdurchführungsausnehmung (8) und zur Bearbeitung eines zweiten zwischen den Klemmbackenaufnahmeeinrichtungen (4, 5) liegenden unteren Kantenradiusbereichs (12) des Turbinenschaufelrohlings (2) durch die zweite Bearbeitungswerkzeugdurchführungsausnehmung (9) hindurchgeführt werden kann, **dadurch gekennzeichnet, dass** die erste und zweite Bearbeitungswerkzeugdurchführungsausnehmung (8, 9) relativ zu einer Querachse (13) der Klemmbackenaufnahmeeinrichtung (4, 5) versetzt angeordnet sind.

2. Spannvorrichtung (1) nach Anspruch 1, **dadurch gekennzeichnet, dass** die erste Bearbeitungswerkzeugdurchführungsausnehmung (8) mittig in der ersten Klemmbackenaufnahmeeinrichtung (4) angeordnet ist und zwei Bearbeitungswerkzeugdurchführungsausnehmungen (9) außermittig in der zweiten Klemmbackenaufnahmeeinrichtung (5) seitlich zu einem mittigen Stegbereich (14) angeordnet sind.

3. Spannvorrichtung (1) nach einem der vorangehenden Ansprüche, **dadurch gekennzeichnet, dass** die erste Klemmbackenaufnahmeeinrichtung (4) und die zweite Klemmbackenaufnahmeeinrichtung (5) relativ zueinander verfahrbar sind.

4. Spannvorrichtung (1) nach einem der vorangehenden Ansprüche, **dadurch gekennzeichnet, dass** die erste Klemmbacke (6) und zweite Klemmbacke (7) relativ zueinander verfahrbar sind.

5. Spannvorrichtung (1) nach einem der vorangehenden Ansprüche, **dadurch gekennzeichnet, dass** die Klemmbacken (6, 7) mindestens ein Andruckelement (15) zur Festlegung des Turbinenschaufelrohlings (2) aufweisen.

6. Spannvorrichtung (1) nach Anspruch 5, **dadurch gekennzeichnet, dass** das Andruckelement (15) an einer Kontaktfläche (16) mit dem Turbinenschaufelrohling (2) eine Schutzschicht (17) aufweist

7. Spannvorrichtung (1) nach Anspruch 6, **dadurch gekennzeichnet, dass** die Schutzschicht (17) aus einem elastischen Material gefertigt ist.

8. Verfahren zum Einspannen und Bearbeiten eines Turbinenschaufelrohlings (2) in einer Bearbeitungsmaschine, wobei ein zu bearbeitender Turbinenschaufelrohling (2) in einem Vorbereitungsschritt in einer Bearbeitungsmaschine mit einer Grundspanneinheiten (3), an der eine erste und eine zweite Klemmbackenaufnahmeeinrichtung (4, 5) gelagert sind und an der ersten Klemmbackenaufnahmeeinrichtung (4) eine erste Klemmbacke (6) und an der zweiten Klemmbackenaufnahmeeinrichtung (5) eine zweite Klemmbacke (7) gelagert sind, zwischen den Klemmbacken (6, 7) klemmend festgelegt wird, **dadurch gekennzeichnet, dass** in einem ersten Bearbeitungsschritt ein Bearbeitungswerkzeug (10) durch eine in der ersten Klemmbackenaufnahmeeinrichtung (4) vorliegende erste Bearbeitungswerkzeugdurchführungsausnehmung (8) senkrecht zu der ersten Klemmbackenaufnahmeeinrichtung (4) durchgeführt wird, und so die Bearbeitung eines ersten, zwischen den Klemmbackenaufnahmeeinrichtung (4, 5) liegenden, unteren Kantenradiusbereichs (11) des Turbinenschaufelrohlings (2) erfolgt, wobei in einem nachfolgenden zweiten Bearbeitungsschritt das Bearbeitungswerkzeug (10) durch eine in der zweiten Klemmbackenaufnahmeeinrichtung (5) vorliegende zweite Bearbeitungswerkzeugdurchführungsausnehmung (9) senkrecht zu der zweiten Klemmbackenaufnahmeeinrichtung (5) durchgeführt wird, und so die Bearbeitung eines zweiten, zwischen den Klemmbackenaufnahmeeinrichtung (4, 5) liegenden, unteren Kantenradiusbereichs (12) des Turbinenschaufelrohlings (2) erfolgt.

9. Verfahren nach Anspruch 8, wobei in einem weiteren Bearbeitungsschritt eine Bearbeitung eines oberen Kantenradiusbereichs (18) des Turbinenschaufelrohlings (2) erfolgt.

10. Verfahren nach Anspruch 8 oder 9, wobei in einem weiteren Bearbeitungsschritt eine Bearbeitung eines seitlichen Kantenradiusbereichs (19) des Turbinenschaufelrohlings (2) erfolgt.

11. Verfahren nach einem der vorangehenden Ansprüche 8 bis 10, wobei eine Fixiereinheit (20) an am Turbinenschaufelrohling (2) angebracht wird, so dass der Turbinenschaufelrohling (2) in eine reproduzierbare Horizontalmittenachse und einem definierten Axialanschlag gebracht vorliegt.

12. Verfahren nach einem der vorangehenden Ansprüche 8 bis 11, wobei in einem weiteren Bearbeitungsschritt eine Bearbeitung der beiden Turbinenschaufelgeometriebereiche Fuß- (19) und Kopfbereiche (19, 24) des Turbinenschaufelrohlings (2) erfolgt.

13. Verfahren nach einem der vorangehenden Ansprüche 8 bis 12, wobei durch das Bearbeitungswerkzeug (10) sowohl die oben wie auch die unten liegende Profilblattkantenradien (11, 12, 18) in einer Radiusgröße über die Profilblattlänge vergrößert oder verkleinert werden kann.

## Claims

1. Clamping device (1) for clamping a turbine blade blank (2) in a processing machine with a basic clamping unit (3), on which a first and a second clamping jaw receiving means (4, 5) are mounted, wherein a first clamping jaw (6) is mounted on the first clamping jaw receiving means (4) and a second clamping jaw (7) is mounted on the second clamping jaw receiving means (5), and wherein the turbine blade blank (2) can be secured between the clamping jaws (6, 7) in a clamped manner, wherein the first clamping jaw receiving means (4) comprises at least a first processing tool passage clearance (8) and the second clamping jaw receiving means (5) comprises at least a second processing tool passage clearance (9), so that a processing tool can be guided through the first processing tool passage clearance (8) to process a first lower edge radius region (11) of the turbine blade blank (2) located between the clamping jaw receiving means (4, 5), and can be guided through the second processing tool passage clearance (9) to process a second lower edge radius region (12) of the turbine blade blank (2) located between the clamping jaw receiving means (4, 5), **characterized in that** the first and second processing tool passage clearances (8, 9) are arranged offset relative to a transverse axis (13) of the clamping jaw receiving means (4, 5).

2. Clamping device (1) according to claim 1, **characterized in that** the first processing tool passage clearance (8) is arranged centrally in the first clamping jaw receiving means (4), and **in that** two processing tool passage clearances (9) are arranged eccentrically in the second clamping jaw receiving means (5) laterally to a central web region (14).

3. Clamping device (1) according to any one of the preceding claims, **characterized in that** the first clamping jaw receiving means (4) and the second clamping jaw receiving means (5) are displaceable relative to one another.

4. Clamping device (1) according to any one of the preceding claims, **characterized in that** the first clamping jaw (6) and the second clamping jaw (7) are displaceable relative to one another.

5. Clamping device (1) according to any one of the preceding claims, **characterized in that** the clamping jaws (6, 7) comprise at least one pressing element (15) for securing the turbine blade blank (2).

6. Clamping device (1) according to claim 5, **characterized in that** the pressing element (15) comprises a protective layer (17) at a contact surface (16) with the turbine blade blank (2).

7. Clamping device (1) according to claim 6, **characterized in that** the protective layer (17) is made of an elastic material.

8. Method of clamping and processing a turbine blade blank (2) in a processing machine, wherein, in a preparation step, a turbine blade blank (2) to be processed is secured in a clamped manner in a processing machine with a basic clamping unit (3), on which a first and a second clamping jaw receiving means (4, 5) are mounted and a first clamping jaw (6) is mounted on the first clamping jaw receiving means (4) and a second clamping jaw (7) is mounted on the second clamping jaw receiving means (5), between the clamping jaws (6, 7), **characterized in that** a processing tool (10) is guided through a first processing tool passage clearance (8) present in the first clamping jaw receiving means (4) vertically to the first clamping jaw receiving means (4) in a first processing step, and thereby the processing of a first lower edge radius region (11) of the turbine blade blank (2) located between the clamping jaw receiving means (4, 5) is effected, wherein in a subsequent second processing step, the processing tool (10) is guided through a second processing tool passage clearance (9) present in the second clamping jaw receiving means (5) vertically to the second clamping jaw receiving means (5), and thereby the processing of a second lower edge radius region (12) of the turbine blade blank (2) located between the clamping jaw receiving means (4, 5) is effected.

9. Method according to claim 8, wherein in a further processing step, a processing of an upper edge radius region (18) of the turbine blade blank (2) is performed.

10. Method according to claim 8 or 9, wherein in a further processing step, a processing of a lateral edge radius region (19) of the turbine blade blank (2) is performed.

11. Method according to any one of the preceding claims 8 to 10, wherein a fixing unit (20) is attached to the turbine blade blank (2) that provides for a reproducible horizontal central axis and a defined axial stop.

12. Method according to any one of the preceding claims 8 to 11, wherein in a further processing step, a processing of the two turbine blade geometrical regions, namely the base region (19) and head regions (19, 24) of the turbine blade blank (2), is performed.

13. Method according to any one of the preceding claims 8 to 12, wherein both the upper and the lower profile blade edge radii (11, 12, 18) can be increased or decreased in radius size over the profile blade length by the processing tool (10).

## Revendications

1. Dispositif de serrage (1) pour serrer une ébauche d'aube de turbine (2) dans une machine d'usinage, comprenant une unité de serrage de base (3), sur laquelle sont montés un premier et un second moyen de réception de mâchoire de serrage (4, 5), une première mâchoire de serrage (6) étant montée sur le premier moyen de réception de mâchoire de serrage (4) et une seconde mâchoire de serrage (7) sur le second moyen de réception de mâchoire de serrage (5) et l'ébauche d'aube de turbine (2) pouvant être immobilisée de manière serrée entre les mâchoires de serrage (6, 7), le premier moyen de réception de mâchoire de serrage (4) comportant au moins un premier évidement de passage d'outil d'usinage (8) et le second moyen de réception de mâchoire de serrage (5) au moins un second évidement de passage d'outil d'usinage (9), de sorte qu'un outil d'usinage (10) peut être passé à travers le premier évidement de passage d'outil d'usinage (8) pour l'usinage d'une première zone de rayon d'arête inférieure (11) de l'ébauche d'aube de turbine (2) se trouvant entre les moyens de réception de mâchoire de serrage (4, 5) et à travers le second évidement de passage d'outil d'usinage (9) pour l'usinage d'une seconde zone de rayon d'arête inférieure (12) de l'ébauche d'aube de turbine (2) se trouvant entre les moyens de réception de mâchoire de serrage (4, 5), **caractérisé en ce que** le premier et le second évidement de passage d'outil d'usinage (8, 9) sont disposés décalés relativement par rapport à un axe transversal (13) du moyen de réception de mâchoire de serrage (4, 5).

2. Dispositif de serrage (1) selon la revendication 1, **caractérisé en ce que** le premier évidement de passage d'outil d'usinage (8) est disposé de manière centrale dans le premier moyen de réception de mâchoire de serrage (4) et deux évidements de passage d'outil d'usinage (9) sont disposés excentrés dans le second moyen de réception de mâchoire de serrage (5) latéralement par rapport à une zone centrale formant pont (14).

3. Dispositif de serrage (1) selon l'une des revendications précédentes, **caractérisé en ce que** le premier moyen de réception de mâchoire de serrage (4) et le second moyen de réception de mâchoire de serrage (5) peuvent être déplacés l'un par rapport à l'autre.

4. Dispositif de serrage (1) selon l'une des revendications précédentes, **caractérisé en ce que** la première mâchoire de serrage (6) et la seconde mâchoire de serrage (7) peuvent être déplacées relativement l'une à l'autre.

5. Dispositif de serrage (1) selon l'une des revendications précédentes, **caractérisé en ce que** les mâchoires de serrage (6, 7) comportent au moins un élément de pression de contact (15) pour immobiliser l'ébauche d'aube de turbine (2).

6. Dispositif de serrage (1) selon la revendication 5, **caractérisé en ce que** l'élément de pression de contact (15) comporte une couche de protection (17) sur une surface de contact (16) avec l'ébauche d'aube de turbine (2) .

7. Dispositif de serrage (1) selon la revendication 6, **caractérisé en ce que** la couche de protection (17) est fabriquée en matériau élastique.

8. Procédé de serrage et d'usinage d'une ébauche d'aube de turbine (2) dans une machine d'usinage, une ébauche d'aube de turbine (2) à usiner étant, dans une étape de préparation, immobilisée de manière serrée dans une machine d'usinage comprenant une unité de serrage de base (3), sur laquelle sont montés un premier et un second moyen de réception de mâchoire de serrage (4, 5) et une première mâchoire de serrage (6) étant montée sur le premier moyen de réception de mâchoire de serrage (4) et une seconde mâchoire de serrage (7) sur le second moyen de réception de mâchoire d'usinage (5), entre les mâchoires de serrage (6, 7), **caractérisé en ce que**, dans une première étape d'usinage, un outil d'usinage (10) est introduit à travers un premier évidement de passage d'outil d'usinage (8) se trouvant dans le premier moyen de réception de mâchoire de serrage (4), perpendiculairement au premier moyen de réception de mâchoire de serrage (4), et l'usinage d'une première zone de rayon d'arête inférieure (11) de l'ébauche d'aube de turbine (2) se trouvant entre les moyens de réception de mâchoire de serrage (4, 5) est ainsi effectué, l'outil d'usinage (10) étant, dans lequel, dans une seconde étape d'usinage subséquente, l'outil d'usinage (10) est introduit à travers un second évidement de passage d'outil d'usinage (9) se trouvant dans le second moyen de réception de mâchoire de serrage (5), perpendiculairement au second moyen de réception de mâchoire de serrage (5), et l'usinage d'une seconde zone de rayon d'arête inférieure (12) de l'ébauche d'aube de turbine (2) se trouvant entre les moyens de réception de mâchoire de serrage (4, 5) étant ainsi effectué.

9. Procédé selon la revendication 8, dans lequel, dans une autre étape d'usinage, un usinage d'une zone de rayon d'arête supérieure (18) de l'ébauche d'aube de turbine (2) est effectué.

10. Procédé selon la revendication 8 ou 9, dans lequel, dans une autre étape d'usinage, un usinage d'une zone de rayon d'arête latérale (19) de l'ébauche d'aube de turbine (2) est effectué.

11. Procédé selon l'une des revendications précédentes 8 à 10, dans lequel une unité de fixation (20) est attachée sur l'ébauche d'aube de turbine (2), qui prévoit pour un axe médian horizontal reproductible et une butée axiale définie.

12. Procédé selon l'une des revendications précédentes 8 à 11, dans lequel, dans une autre étape d'usinage, un usinage des deux zones géométriques d'aube de turbine, à savoir la zone de pied (19) et la zone de tête (19, 24), de l'ébauche d'aube de turbine (2) est effectué.

13. Procédé selon l'une des revendications précédentes 8 à 12, dans lequel aussi bien les rayons d'arête de pale profilée (11, 12, 18) supérieurs qu'inférieurs peuvent être augmentés ou diminués en grandeur de rayon sur la longueur de pale profilée par l'outil d'usinage (10).
